# FASCICULE DE BREVET EUROPEEN

(11) **EP 3 729 846 B1**
(45) Date de publication et mention de la délivrance du brevet: **15.02.2023**
(21) Numéro de dépôt: 18833983.2
(22) Date de dépôt: 19.12.2018
(51) Int. Cl.: H04W 8/20, H04W 48/18

(54) **PROCÉDÉ DE CONFIGURATION DYNAMIQUE D'ENTITÉS D'UN RÉSEAU DE COMMUNICATIONS POUR L'ACHEMINEMENT DE DONNÉES D'UN TERMINAL VISITEUR**
VERFAHREN ZUR DYNAMISCH KONFIGURIEREN EINES KOMMUNIKATIONSNETZWERKS ZUR DATENLIEFERUNG EINES BESUCHER-TERMINALS
METHOD FOR DYNAMICALLY CONFIGURING ENTITIES OF A COMMUNICATIONS NETWORK FOR DATA DELIVERY OF A VISITOR TERMINAL

(30) Priorité: 22.12.2017 FR 1763063
(43) Date de publication de la demande: 28.10.2020
(73) Titulaire: Orange, 92130 Issy-les-Moulineaux (FR)
(72) Inventeur: MARJOU, Xavier, 92326 CHÂTILLON CEDEX (FR); RADIER, Benoît, 92326 CHÂTILLON CEDEX (FR); FROMENTOUX, Gaël, 92326 CHÂTILLON CEDEX (FR)
(86) Numéro de dépôt international: PCT/FR2018/053405
(87) Numéro de publication internationale: WO 2019/122711

(56) Documents cités:
- WO-A1-2012/160201
- US-A1- 2013 225 123
- US-A1- 2014 086 177

## Description

### 1. Domaine de l'invention

La demande d'invention se situe dans le domaine des réseaux d'accès et est relative aux techniques d'itinérance d'un terminal sur un ensemble de réseaux d'accès.

### 2. Etat de la technique antérieure

La mutualisation des réseaux mobiles avec de l'itinérance entre opérateurs est devenue un enjeu stratégique pour les opérateurs afin de réduire leurs coûts de couverture réseaux surtout dans les zones blanches, c'est-à-dire non couvertes par des réseaux, et pour lesquelles il peut être coûteux pour des opérateurs de déployer leurs infrastructures spécifiques. Notamment dans les zones à faible densité de population, le plus souvent un opérateur déploie un réseau mobile, prioritairement pour assurer une connectivité à ses clients, mais aussi pour des clients d'autres opérateurs n'ayant pas déployé d'infrastructure dans la zone géographique. Une option alternative à cette option consiste à déployer une infrastructure de télécommunications en commun entre plusieurs opérateurs, chaque opérateur finançant une partie de l'infrastructure conformément à un accord signé entre les opérateurs. Selon les cas, une ou plusieurs parties de l'infrastructure de communication mobile peut être mutualisé. Ainsi, dans certains cas, uniquement l'infrastructure physique d'accès (pylônes, antennes, bâtiments...) est partagée. Dans d'autres cas le réseau d'accès (en anglais Radio Access Network) ou l'ensemble du réseau de communication est partagé. Cette option de partage de réseaux est assez difficile à mettre en oeuvre en raison des problèmes de sécurité et d'administration que cela entraîne pour les clients et les opérateurs.

Préférablement, un opérateur prend en charge le déploiement du réseau de communication mobile et l'administration de ce réseau et permet aux clients d'autres opérateurs de se connecter (ou de s'attacher - dans le document l'attachement est équivalent à la connexion) en l'absence de réseau déployé par les opérateurs auprès desquels ils ont souscrit un service. Ce service d'itinérance peut cependant conduire à des restrictions de services pour le client d'un opérateur («visité») différent de celui (« home ») possédant le réseau de communication. Des exemples se trouvent dans US 2013/0225123, US 2014/0086177 et WO 2012/160201.

On appellera ce client un client « visiteur » tandis que le client de l'opérateur administrant le réseau de communication mobile sera dénommé client « à domicile ». Dans la majorité des cas, le service d'itinérance est contrôlé par l'opérateur « home » qui peut, selon les circonstances (trafic écoulé, nombres de connexions, opérateurs...), autoriser ou non les connexions de clients « visiteurs » ou les services auxquels des clients « visiteurs » peuvent utiliser. Dans ce cas, le client « visiteur » possède une liste de réseaux « visiteurs » auxquels il lui est possible de se connecter conformément à des accords passés entre opérateurs. Par exemple, si le client visiteur est client de l'opérateur « V », il se connectera préférablement au réseau « A », sinon au réseau « B » etc...Selon une autre possibilité, le client « visiteur » peut prendre le contrôle de la sélection d'accès et opter lui-même pour un réseau d'opérateur. Dans ce cas, le client visiteur peut opter pour une connexion au réseau « B » plutôt qu'au réseau « A ». Cette seconde option peut engendrer un problème de connexion pour le client visiteur, notamment dans le cas où l'accord avec l'opérateur qu'il a sélectionné pour se connecter est moins riche fonctionnellement ou limité à certains créneaux horaires.

Quelle que soit l'option retenue, selon les techniques de l'art antérieur, les opérateurs « home » et « visité » doivent s'entendre et contractualiser le service d'itinérance pour que les équipements de réseau de l'opérateur « visité » autorisent la connexion du client « visiteur » et que le comptage du trafic et la facturation associée soient réalisés conformément au contrat signé entre les opérateurs. Ainsi à ce jour, la mise en place d'un accord d'itinérance n'est pas réalisable automatiquement et à la volée: il faut recourir aux systèmes d'informations respectifs des opérateurs.

Hors, dans certaines situations, notamment si les réseaux disponibles à un endroit donné sont gérés par des opérateurs avec lesquels un opérateur « home » n'a pas contractualisé, les clients ne peuvent pas avoir de connectivité alors même que des réseaux d'accès peuvent être disponibles. Le problème se pose également si les opérateurs ayant signé un contrat opèrent des réseaux qui ne sont pas disponibles à un instant donné. Dans ce cas, le client « visiteur » ne pourra pas se connecter à un réseau d'opérateur n'ayant pas contractualisé avec l'opérateur du réseau « home ». En outre, dans les réseaux mobiles jusqu'à la génération 4G (Quatrième génération) un terminal ne peut s'attacher à un réseau différent de son réseau « home » si celui-ci est disponible. La future génération de réseaux, dite 5G, permet l'attachement à un réseau visité même si le réseau « mère » est disponible mais rien n'est décrit sur les interactions possibles entre les réseaux « home » et « visité », ni sur les impacts pour les terminaux. Notamment, il n'existe pas de mécanisme pour la mise en oeuvre dynamique et non programmée d'une solution d'itinérance entre opérateurs, comprenant un processus de mise à jour dynamique des équipements des réseaux pour autoriser la connexion d'un client « visiteur ».

Un des buts de la présente invention est de remédier aux insuffisances/inconvénients de l'état de la technique, discutés ci-dessus et/ou d'y apporter des améliorations.

### 3. Exposé de l'invention

L'invention vient améliorer la situation à l'aide d'un procédé de configuration d'au moins un terminal d'un utilisateur client d'un opérateur gérant un premier réseau de communications, préalablement à une demande d'attachement d'au moins un terminal à un deuxième réseau de communications dont des ressources de transmission sont temporairement utilisées pour l'acheminement de données de l'au moins un terminal à destination d'un serveur distant, le procédé comprenant les étapes suivantes mises en oeuvre par une entité de contrôle du deuxième réseau :
- Réception en provenance d'une entité de contrôle du premier réseau d'une instruction de gestion relative à l'attachement de l'au moins un terminal au deuxième réseau pour une zone géographique,
- Configuration d'une donnée relative au contrôle de l'attachement de l'au moins un terminal en fonction de l'instruction de gestion reçue,
- Emission à destination de l'au moins un terminal d'au moins un paramètre de configuration pour l'attachement de l'au moins un terminal au deuxième réseau.

Selon les techniques antérieures, un terminal d'un utilisateur ne peut se connecter à un deuxième réseau de communications, un réseau dit visité, alternatif à un premier réseau de communications, que s'il a été préconfiguré auparavant, en fonction de contrats d'itinérance signés entre les opérateurs gérant les deux réseaux de communications. Le procédé permet avantageusement de modifier la configuration d'un terminal pour que celui-ci puisse s'attacher à un deuxième réseau de communications dont l'opérateur, dit visité, n'a initialement pas de contrat d'itinérance avec l'opérateur, dit home, auprès duquel l'utilisateur est abonné. Grâce au procédé, la configuration du terminal est modifiée dynamiquement pour qu'il puisse s'attacher à n'importe quel réseau visité dont l'opérateur a vendu ou loué des ressources à l'opérateur home pour une zone géographique qui peut être définie par rapport à une coordonnée GPS de l'au moins un terminal. Dans le cas par exemple où l'opérateur home manque de ressources pendant une période de temps et sur une zone géographique, celui-ci achète ou loue des capacités à un autre opérateur et les met à disposition de ses clients. S'agissant possiblement de capacités limitées dans le temps et l'espace, l'opérateur home doit transmettre des informations de configuration au réseau visité et consécutivement au terminal pour que le réseau visité ne rejette pas une demande d'attachement du terminal et que le terminal dispose des informations pour s'attacher à ce réseau visité pour lequel il ne disposait pas d'informations avant de recevoir le message de configuration. Ce procédé permet ainsi d'améliorer la connectivité du terminal en permettant à celui-ci de se connecter à un plus grand nombre de réseaux de communications. Le procédé permet en outre de mieux utiliser les ressources des opérateurs sur une zone géographique donnée grâce à des accords d'échanges de capacités entre les opérateurs. De plus, ce procédé permet d'améliorer la qualité d'expérience de l'utilisateur en lui faisant bénéficier de ressources auxquelles il n'aurait pas eu accès dans des architectures conformes aux techniques antérieures. Le terminal peut en outre être connecté à plusieurs réseaux et recevoir des informations de configuration associées aux différents réseaux auxquels il pourra s'attacher, simultanément ou non. Le terminal peut, selon un exemple, être attaché au premier réseau lorsqu'il s'attache au deuxième réseau. L'attachement consistant à ce que le terminal soit configuré avec une adresse IP, la configuration de la donnée relative au contrôle de l'attachement peut être réalisée via des protocoles radio (Wi-Fi, LTE (« Long Term Evolution », 3G, 5G,...) ou lors des échanges protocolaires précédant l'allocation d'une adresse IP au terminal, par exemple par une passerelle mobile (PDN-GW, GGSN (« Gateway GPRS Support Node »)).

Selon une caractéristique particulière, l'instruction de gestion comprend en outre une date ou une durée.

L'offre, la vente ou la location de ressources est uniquement valide pour une date ou une durée définie, ou bien pour une date et une durée, ce qui présente l'avantage pour l'opérateur du réseau visité de garder un contrôle sur ses ressources tout en bénéficiant du crédit de la mise à disposition de ressources à un autre opérateur. Cette caractéristique de durée permet à l'opérateur home de limiter ses investissements et de profiter des ressources de l'autre opérateur en cas d'indisponibilité ou de manque de ressources temporaire pour les besoins de ses clients.

Selon une caractéristique particulière, l'instruction de gestion comprend au moins un identifiant de l'au moins un terminal.

Le procédé peut avantageusement être mis en oeuvre pour un nombre limité de terminaux dont l'identifiant est alors transmis dans l'instruction de gestion. Selon un exemple, il peut s'agir d'offrir une meilleure qualité de service à des clients professionnels ou à des clients ayant souscrit un contrat supérieur leur attribuant une possibilité de connectivité améliorée. Les terminaux de ces clients sont alors explicitement identifiés dans l'instruction de gestion pour qu'ils puissent s'attacher au réseau visité. Les identifiants des terminaux peuvent être des identifiant IMEI (« International Mobile Equipment Identity ») ou MSISDN (« Mobile Station International Subscriber Directory Number ») ou une adresse réseau, par exemple une adresse IP ou bien encore un identifiant de compte de crédit de l'utilisateur.

Selon une caractéristique particulière, l'instruction de gestion comprend un identifiant de transaction.

L'utilisation temporaire de ressources de transmission du deuxième réseau pour les besoins d'un client du premier réseau requiert une transaction entre les opérateurs des deux réseaux. L'instruction de gestion peut avantageusement comprendre un identifiant de la transaction de façon par exemple, à pouvoir valoriser la transaction et lui associer une rétribution financière. L'identifiant de transaction peut lui-même comprendre un identifiant de contrat entre les deux opérateurs, et un numéro de transaction.

Selon une caractéristique particulière, l'instruction de gestion comprend une quantité de crédits.

Le volume des ressources du deuxième réseau utilisables par des terminaux du premier réseau est valorisé en une quantité de crédits, par exemple contractualisé entre les opérateurs des deux réseaux. Ces crédits, qui peuvent correspondre à une durée ou à un volume de données ou à un montant monétaire, représentent le volume de ressources affectées par le deuxième réseau. Le deuxième réseau met en oeuvre un compteur utilisé pour empêcher que les terminaux du premier réseau ne dépassent la quantité de crédits relative à la transaction et transmis dans l'instruction de gestion émise par l'entité de contrôle du premier réseau.

Selon une caractéristique particulière, la donnée relative au contrôle de l'attachement comprend des règles de filtrage.

Les entités du deuxième réseau, comprenant les eNodeB, les S-GW (serving Gateways), PDN-GW (Packet Data Networks Gateways), les HSS (Home Subscriber Server) sont, selon les techniques antérieures, configurés pour ne pas autoriser l'attachement de terminaux autres que ceux bénéficiant d'un abonnement ou ayant un contrat d'itinérance avec l'opérateur du deuxième réseau. Selon le procédé de configuration, ces équipements doivent notamment être configurés dynamiquement pour autoriser pour une zone géographique donnée l'attachement de terminaux d'autres opérateurs. La zone géographique peut être identifiée par des coordonnées géographiques ou par une localisation réseau (cell-ID («Cell- Identifier »), LAI (« Location Area Identity »), TAI (« Tracking Area Identifier »).

Selon une caractéristique particulière, la donnée relative au contrôle de l'attachement comprend au moins un critère utilisé pour autoriser ou non l'attachement du terminal.

Le critère peut notamment comprendre une information relative au nombre de terminaux attachés ou à un volume d'informations transmises, ou à une durée d'attachement de l'au moins un terminal ou à une application utilisée par l'au moins un terminal ou bien encore plusieurs informations proposées ci-avant. L'offre, la vente ou la location de ressources peut avoir comme paramètre un nombre d'attachements simultanés de terminaux au deuxième réseau. Dans ce cas le deuxième réseau compte les terminaux de l'opérateur du premier réseau, attachés au deuxième réseau et interdit les attachements de nouveaux terminaux lorsque le seuil est atteint. Il peut aussi déconnecter des terminaux si le quota est atteint et par exemple s'il a besoin d'autoriser l'attachement d'un terminal « prioritaire » du premier réseau. Ainsi le deuxième réseau conserve des ressources disponibles pour ses clients. L'offre, la vente ou la location de ressources peut alternativement ou de façon complémentaire, avoir comme paramètre un volume de données ou une durée ou une application par exemple pour limiter le nombre de SMS/MMS acheminés par le second réseau. Ces paramètres sont mis à profit pour limiter l'utilisation de ressources de transmission par les terminaux de l'opérateur du premier réseau, conformément à un contrat de réservation ou de location établi entre les opérateurs des premier et deuxième réseaux. Un suivi des données relatives aux terminaux des clients de l'opérateur du premier réseau est nécessaire pour interdire le cas échéant l'attachement de nouveaux terminaux si le seuil de données admises est atteint.

Selon une caractéristique particulière, l'au moins un paramètre de configuration comprend un identifiant de transaction.

Un identifiant de transaction correspondant à l'affectation temporaire de ressources par le deuxième réseau pour des terminaux du premier réseau peut avantageusement être partagé entre les opérateurs et possiblement transmis au terminal. Le deuxième réseau et possiblement le premier réseau peuvent alors retrouver les informations associés à la transaction (comme les identifiants des terminaux utilisé pour s'attacher au deuxième réseau) et peuvent alors compter les terminaux et les données, décrémenter les crédits, comptabiliser les durées des terminaux correspondant à l'identifiant de transaction.

Selon une caractéristique particulière, l'au moins un paramètre de configuration comprend une clé de sécurité de l'opérateur gérant le premier réseau.

Selon les techniques antérieures, la modification d'une configuration d'un terminal est réalisée par l'opérateur auprès duquel un contrat d'abonnement est signé par l'utilisateur du terminal. Selon le procédé, un paramètre de configuration est transmis par le deuxième réseau, ce qui peut poser des problèmes de sécurité et de confiance du réseau transmettant des informations de configuration. Le paramètre de configuration peut avantageusement comprendre une clé de sécurité de l'opérateur du premier réseau que le deuxième réseau aura préalablement obtenu, selon un exemple dans l'instruction de gestion reçue, et que le terminal peut exploiter pour s'assurer qu'il ne s'agit pas d'une instruction qui pourrait lui être dommageable. Cette clé de sécurité peut être associée à l'identifiant unique de transaction validé et certifié, chiffré avec les clés publiques des opérateurs impliqués dans la transaction.

Selon une caractéristique particulière, l'au moins un paramètre de configuration comprend une durée de validité pour s'attacher au deuxième réseau.

Le terminal ne doit pas tenter de s'attacher à un réseau pour lequel l'opérateur du premier réseau n'a pas ou n'a plus loué ou réservé de ressources de transmission. Selon l'art antérieur, les techniques relatives à l'itinérance requièrent de transmettre une nouvelle configuration au terminal pour ajouter ou supprimer un réseau, identifié par un PLMN ID (« Public Land Mobile Network Identifier »), auquel le terminal peut s'attacher en situation d'itinérance. La durée de validité peut correspondre à une durée effective ou bien à une date ou bien encore à une date et une durée. La durée de validité permet de ne pas envoyer de nouveau paramètre de configuration lorsqu'un réseau ne doit plus être utilisé et donc de sauvegarder des ressources des réseaux en évitant l'envoi de tentatives d'accès par le terminal.

Selon un deuxième aspect, il est proposé un dispositif de configuration, comprenant des moyens pour configurer au moins un terminal d'un utilisateur client d'un opérateur gérant un premier réseau de communications, préalablement à l'attachement de l'au moins un terminal à un deuxième réseau de communications dont des ressources de transmission sont temporairement utilisées pour l'acheminement de données de l'au moins un terminal à destination d'un serveur distant, mis en oeuvre dans une entité de contrôle du deuxième réseau et comprenant :
- un récepteur, apte à recevoir en provenance d'une entité de contrôle du premier réseau, une instruction de gestion relative à l'attachement de l'au moins un terminal au deuxième réseau pour une zone géographique,
- un module de configuration, apte à configurer une donnée relative au contrôle de l'attachement de l'au moins un terminal en fonction de l'instruction de gestion reçue,
- un émetteur, apte à émettre à destination de l'au moins un terminal, au moins un paramètre de configuration pour l'attachement de l'au moins un terminal au deuxième réseau.

Ce dispositif est apte à mettre en oeuvre dans tous ses modes de réalisation le procédé de configuration qui vient d'être décrit. Ce dispositif est destiné à être mis en oeuvre dans un équipement de contrôle d'un réseau.

Selon un troisième aspect, il est proposé un terminal d'un utilisateur client d'un opérateur gérant un premier réseau de communications, apte à s'attacher à au moins un deuxième réseau de communications dont des ressources de transmission sont temporairement utilisées pour l'acheminement de données du terminal à destination d'un serveur distant, comprenant :
- un récepteur apte à recevoir,
   - en provenance d'une entité de contrôle du deuxième réseau, au moins un paramètre de configuration pour l'attachement de l'au moins un terminal au deuxième réseau,
   - un message de commande d'attachement comprenant des conditions d'attachement au deuxième réseau,
- un module de configuration pour mettre à jour la liste des réseaux auxquels il peut accéder et la zone géographique associée aux réseaux.

Selon une caractéristique particulière, l'attachement du terminal au deuxième réseau est réalisé en utilisant un nombre de crédits de l'utilisateur.

Le terminal, ayant un nombre de crédits de l'utilisateur à sa disposition, aura une possibilité d'accès au deuxième réseau en fonction de la quantité de ces crédits. Cela permet de limiter les possibilités d'accès au deuxième réseau et d'éviter qu'un terminal visiteur ne consomme trop de ressources du deuxième réseau.

L'invention concerne aussi un programme d'ordinateur comprenant des instructions pour la mise en oeuvre des étapes du procédé de configuration qui vient d'être décrit, lorsque ce programme est exécuté par un processeur.

Ce programme peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions du programme d'ordinateur tel que mentionné ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :
- la figure 1 présente une architecture de service d'itinérance entre deux opérateurs de réseaux de communications selon les techniques de l'art antérieur,
- la figure 2 présente une architecture de service d'itinérance entre deux opérateurs de réseaux de communications dans laquelle est mis en oeuvre le procédé de configuration, selon un premier mode de réalisation,

- la figure 3 présente un aperçu du procédé de configuration d'un terminal, selon un deuxième mode de réalisation de l'invention,
- la figure 4 présente un aperçu du procédé de configuration d'un terminal, selon un troisième mode de réalisation de l'invention,
- la figure 5 présente un exemple de structure d'un dispositif de configuration, selon un aspect de l'invention.
- la figure 6 présente un exemple de structure d'un terminal selon un aspect de l'invention.

### 5. Description détaillée d'au moins un mode de réalisation de l'invention

Dans la suite de la description, on présente des exemples de plusieurs modes de réalisation de l'invention dans une infrastructure de communication, qui peut être fixe et/ou mobile.

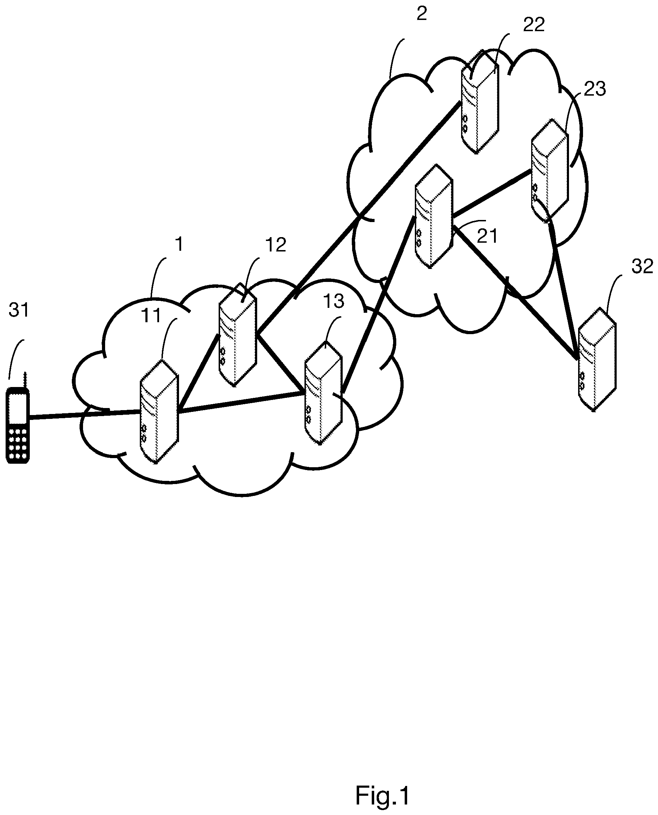

On se réfère tout d'abord à la **figure 1** qui présente une architecture de service d'itinérance entre deux opérateurs de réseaux de communications selon les techniques de l'art antérieur. L'opérateur « home » gère le réseau de communications 2 et l'opérateur « visité » gère le réseau de communications 1. Dans la suite de la description, il sera fait référence au réseau « visité », signifiant le réseau de communications géré par l'opérateur visité et le réseau « home », réseau géré par l'opérateur « home ».

L'utilisateur du terminal 31 a souscrit un abonnement avec l'opérateur « home », autorisant ses terminaux à s'attacher aux réseaux gérés par l'opérateur « home » dans les conditions décrites dans l'abonnement. Dans la figure 1, le terminal peut s'attacher directement au réseau 2. L'opérateur « home » a par ailleurs signé un contrat dit d'itinérance permettant aux terminaux des clients ayant un abonnement auprès de lui de s'attacher à d'autres réseaux gérés par des opérateurs avec lesquels l'opérateur « home » a signé un contrat d'itinérance.

Le terminal s'attache au réseau 1, dont l'opérateur a signé un contrat d'itinérance avec l'opérateur du réseau 2. Ce contrat d'itinérance permet aux terminaux des clients de l'opérateur du réseau 1 de pouvoir s'attacher à des réseaux multiples, en fonction des contrats signés entre les opérateurs. Ces contrats, une fois signés, impliquent des configurations des équipements des réseaux pour pouvoir autoriser l'attachement du terminal 31 au réseau 1, de pouvoir acheminer les données du terminal 31 jusqu'à leur destination et de pouvoir assurer la facturation du service d'acheminement conformément au contrat signé. Ainsi, le terminal s'attache à une entité 11 du réseau de communications 1. L'entité 11 peut être indifféremment une station NodeB, une station eNodeB, une station BTS (« Base Transceiver Station ») ou bien une station d'accès d'un réseau de cinquième génération. Ce dispositif 11 est connecté à une entité 12 de gestion, par exemple une entité MME (« Mobility Management Entity ») et à une entité 13 de routage, par exemple de type S-GW (« Serving Gateway »). L'entité 12 (MME) du réseau 1 est interconnectée, le plus souvent indirectement via un réseau d'interconnexion, à une entité de routage du réseau 2, par exemple une entité de type PDN-GW. L'entité 12 est par ailleurs connectée à une entité 22 de gestion des abonnés qui peut être une entité de type HSS « Home Subscriber Server »), notamment afin d'autoriser ou non l'attachement du terminal 31 au réseau 1. Le réseau 2 comprend en outre une entité 23 de contrôle de flux, qui peut être une entité PCRF (« Policy and Control Rules Function »). Les données du terminal 31 sont ainsi acheminées via le réseau 1 puis le réseau 2, dans le cas d'une architecture dite « Home Routed » vers le serveur 32 de données. Il est à noter que les contrats d'itinérance sont signés entre les opérateurs indépendamment des besoins en temps réel de connectivité des terminaux. Ces contrats requièrent en effet des configurations dites statiques pour qu'un réseau puisse acheminer les données de terminaux d'utilisateurs qui ne sont pas clients de l'opérateur gérant le réseau en question.

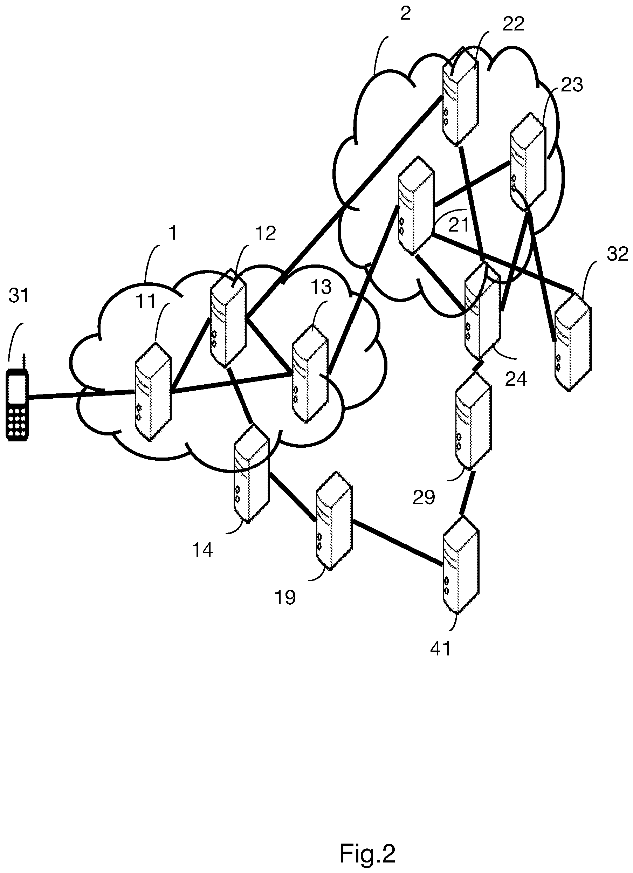

En relation avec la **figure 2****,** on présente une architecture de service d'itinérance entre deux opérateurs de réseaux de communications dans laquelle est mis en oeuvre le procédé de configuration, selon un premier mode de réalisation.

Il est considéré dans cette figure 2 les changements suivants par rapport à la figure 1.

Selon un exemple, l'utilisateur du terminal 31 peut acheter un service d'itinérance via des crédits (aussi appelés tokens ou jetons). Les crédits sont par exemple disponibles dans le portefeuille numérique de l'utilisateur du terminal 31 qui est attaché au compte de l'utilisateur abonné à l'opérateur du réseau 2 (Home). Le terminal peut faire usage de ces crédits sur des réseaux visités. Il est à noter que les crédits pourraient être aussi utilisés par l'utilisateur pour se connecter au réseau 2, dans le cas où l'abonnement à l'opérateur du réseau 2 comprend une fourniture d'un nombre de crédits pour s'attacher au réseau 2.

Cette figure 2 se différencie aussi par rapport à la figure 1 par l'ajout de nouvelles entités. L'entité 14 dans le réseau 1 est une entité de gestion du réseau 1 qui a pour objet d'obtenir des informations relatives au trafic écoulé dans le réseau 1, par exemple via des sondes ou des entités spécifiques non représentées sur la figure 2, et de reconfigurer des entités du réseau 1 en cas de nécessité. Notamment si le trafic dans le réseau 1 est mal équilibré entre les différentes entités, il pourra reconfigurer les entités du réseau 1 pour mieux répartir le trafic. L'entité 14 peut par exemple être basée sur la spécification 3GPP TS 32.500 (version 14.0.0 du 04 avril 2017). De la même façon, une entité 24 ayant la même fonction que l'entité 14 pour le réseau 1 est déployée dans le réseau 2. Ces deux entités 14 et 24 sont par ailleurs connectées à une entité 41 via des entités respectives 19 NEF1 et 29 NEF2 (« Network Exposure Function ») qui sont les entités qui exposent les services de partages de ressources (offre et demande) de chaque réseau respectif 1 et 2. L'entité 41 peut être gérée par l'un des deux opérateurs des réseaux 1 et 2 ou bien par une entité externe qui peut être par exemple cogérée par les deux opérateurs (il peut s'agir d'une base de registres de transaction distribuée entre les opérateurs enregistrant les informations sur les transactions passés entre les opérateurs). Cette entité a pour objet de gérer les demandes (ex : achats) et/ou les offres (ex : ventes) de ressources de transmission entre l'opérateur du réseau 1 et l'opérateur du réseau 2. Cette entité peut être connectée à plusieurs réseaux de communications de façon à constituer une place de négociation de ressources. Selon un exemple, les entités 14 et 24 peuvent être directement connectées via leur entité NEF (NEF1 19 et NEF2 29) et négocier des ressources de pair à pair. Lorsqu'un réseau dispose de plus de ressources de transmission que nécessaire, il les met à disposition d'autres opérateurs. Si des opérateurs en manquent, ils en loueront ou en achèteront à ceux qui en ont plus que nécessaire de façon dynamique, c'est-à-dire pour répondre par exemple à un problème de disponibilité ressources de transmission. Ce problème peut être temporaire et/ou géographique et est une alternative intéressante à la construction de réseaux. Les ressources de transmission peuvent être des fréquences hertziennes, de la bande passante sur des infrastructures, des capacités de routage dans des entités ou bien encore des capacités de traitement. Les techniques de virtualisation autorisent en effet la mise à disposition de ressources de façon plus agile.

Selon un mode de réalisation, l'offre et la demande de ressources entre deux ou plusieurs opérateurs peut être identifiée par un identifiant de transaction. L'identifiant de transaction est unique et peut, selon un exemple, être associé à un nombre de crédits correspondant à un volume de ressources mises à disposition par un opérateur vers l'autre ou les autre(s) opérateur(s). La transaction peut comprendre un nombre de crédits que des utilisateurs de terminaux bénéficiant de la transaction peuvent consommer. Chaque transaction validée, c'est-à-dire ayant eu l'accord des opérateurs impliqués dans la transaction, est enregistrée avec un identifiant unique de transaction dans une base de registres de transactions qui peut être distribuée entre les opérateurs. L'identifiant de transaction unique permet par exemple d'associer :
- les identifiants des terminaux (MSISDN ou IMEI ou adresse IP par exemple) des utilisateurs bénéficiaires de l'accord et possiblement l'identifiant de compte des utilisateurs et l'état des comptes (le nombre de crédits) des utilisateurs,
- l'identifiant de l'opérateur (ou les identifiants des opérateurs) qui demande une ressource pour ses clients et l'état de son compte (nombre de crédits),
- l'identifiant de l'opérateur de la transaction qui offre une ressource pour un (ou des) opérateur(s) et l'état de son compte (nombre de crédits),
- le coût de la transaction en crédits.

Cet identifiant de transaction unique est validé et créé si les crédits contenus dans le compte de l'opérateur demandant une ressource et / ou les crédits contenus dans les comptes des clients bénéficiaires de l'offre sont disponibles. Le réseau 1 va en effet allouer des crédits à des clients du réseau 2, conformément au contenu de la transaction identifiée par un identifiant de transaction unique, que le réseau 2 doit payer en crédits, dans le cadre d'un échange, ou en monnaie. La base de registres de transactions peut également servir à vérifier que la balance entre les comptes des opérateurs n'est pas trop déséquilibrée pour assurer le bon partage des ressources entre opérateurs.

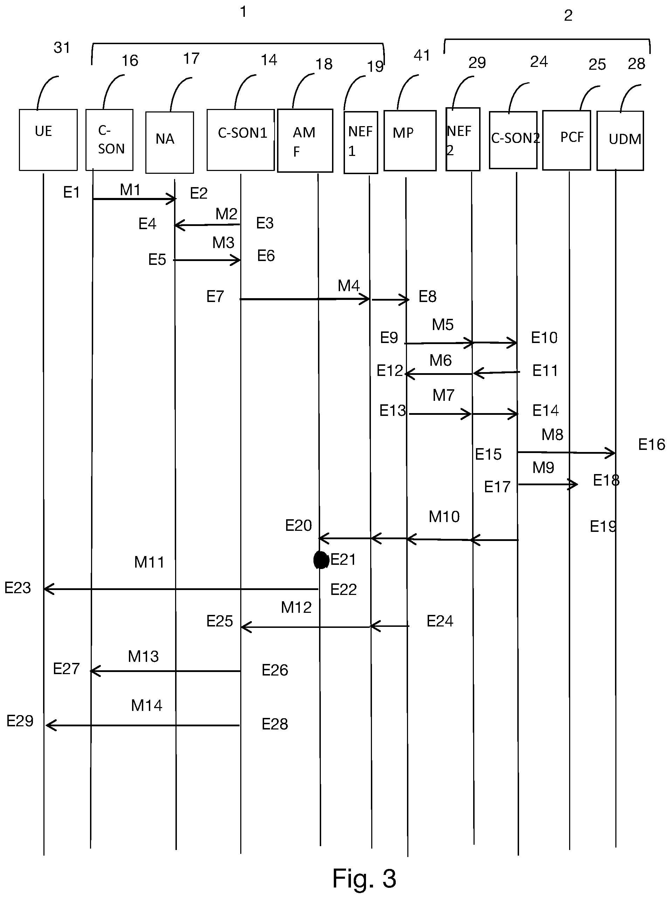

La **figure 3** présente un aperçu du procédé de configuration d'un terminal, selon un deuxième mode de réalisation de l'invention. Ce mode de réalisation est mis en oeuvre dans une architecture de réseau 5G telle que définie dans le document 3GPP TS 23.501 (Version 12/2017).

Lors de l'étape E1, une entité 16 C-SON (« Centralized Self-Organizing Network »), gérant les ressources des réseaux d'accès du réseau 1, transmet à une entité 17 NA (« Network Analytics ») un message M1 comprenant des informations sur les capacités des antennes Radio des réseaux d'accès du réseau 1.

L'entité 16 C-SON a pour objet de mettre à jour les configurations des équipements de réseau de façon automatique pour équilibrer la charge et optimiser l'utilisation des différents équipements notamment. Ce message M1 est transmis périodiquement. Une entité 14 C-SON1 de gestion de l'ensemble du réseau 1 transmet lors de l'étape E3 un message M2 comprenant des informations sur les terminaux attachés au réseau 1 ainsi que les identifiants de ces terminaux à l'entité 17 NA. A partir de ces données reçues de l'entité 14 C-SON1 lors de l'étape E2 et de l'entité 16 lors de l'étape E4, l'entité 17 NA prédit des disponibilités de ressources ou des manques de ressources. Il peut par exemple effectuer des prédictions en fonction de données historiques et de la variation du nombre de terminaux attachés. Lors de l'étape E5, l'entité 17 NA transmet ces prédictions dans un message M3 à l'entité 14 C-SON1. A la réception du message M3 lors de l'étape E6, l'entité 14 transmet un message M4 à une entité 41 MP (« Market Place ») de gestion des ressources de transmission pour un ensemble d'opérateurs via l'entité 19 NEF1. L'entité 41 MP reçoit le message M4 lors de l'étape E8 et est informée par ce message M4 que l'opérateur du réseau 1 dispose de ressources de transmission ou manque de ressources. On considère dans ce mode de réalisation que le réseau 1 dispose de ressources supérieures aux besoins tels qu'il les a prédits. Le message M4 peut comprendre une information sur le nombre de terminaux d'autres opérateurs que le réseau 1 peut accueillir, le nombre de crédits qu'il peut proposer, la date et la durée pendant lesquelles les ressources peuvent être louées, le volume de données pouvant être acheminé par le réseau 1 pour le compte d'un autre opérateur ainsi que la zone géographique de validité de cette offre de ressources. L'entité 41 MP reçoit périodiquement le message M4 et les autres opérateurs pour lesquels il gère les ressources de transmission transmettent également leurs propositions de ressources ou leurs besoins. On considère, selon un exemple, que le réseau 2 transmet un message non représenté sur la figure, indiquant à l'entité 41 un besoin de ressources.

Lors de l'étape E9, l'entité 41 MP transmet à l'entité de gestion 24 C-SON2 du réseau 2 (correspondant à l'entité 14 pour le réseau 1) un message M5 comprenant une offre de ressources de transmission du réseau 1 via l'entité 29 NEF2. Cette offre peut comprendre une information sur le nombre de terminaux de l'opérateur du réseau 2 pouvant s'attacher au réseau 1, le nombre de crédits proposés, la durée pendant laquelle le ressources peuvent être louées, le volume de données pouvant être acheminé par le réseau 1 pour le compte du réseau 2 ainsi que la zone géographique de validité de cette offre de ressources. Cette offre peut être proposée à plusieurs opérateurs ayant indiqué des besoins en ressources. Cette offre est reçue par l'entité 24 C-SON2 lors de l'étape E10 via l'entité 29 NEF2.

Lors de l'étape E11, l'entité 24 C-SON2 transmet un message M6 comprenant une demande de réservation ou de location de ressources de transmission du réseau 1 à l'entité 41 MP via l'entité 29 NEF2. Selon les cas, cette demande comprend une partie ou l'ensemble des informations suivantes :
- un nombre de terminaux à connecter,
- une date et une durée d'achat ou de location souhaitée,
- une zone géographique souhaitée,
- un type de technologie (UMTS (« Universal Mobile Télécommunications System »), WLAN (« Wireless Local Area Network »), LTE (« Long Term Evolution »)),
- un volume de données à transmettre
- un nombre de crédits.

Dans ce mode de réalisation, l'entité 41 MP reçoit la demande lors de l'étape E12 et accorde les ressources via l'entité 29 NEF2. A l'étape E13, l'entité 41 MP valide la demande dans un message M7 qu'elle transmet à l'entité 24 via l'entité 29 NEF2. Elle peut en outre affecter un identifiant de transaction pour cette demande. Le message M7 peut modifier les informations présentes dans la demande du message M6 et comprend en outre un ou plusieurs identifiant(s) de réseau(x) au(x)quel(s) les terminaux du réseau 2 pourront s'attacher selon les conditions relatives aux informations transmises dans le message M7 reçu par l'entité 24 C-SON2 lors de l'étape E14, via l'entité 29 NEF2, Le message M7 contient en outre l'identifiant de la transaction unique validée et affectée par l'entité 41 MP.

Une fois la réservation ou la location de ressources effectuée, la configuration des entités des réseaux respectifs 1 et 2 doit être réalisée pour que des terminaux abonnés à l'opérateur gérant le réseau 2 puissent s'attacher au réseau 1 suivant les modalités de la transaction.

Lors de l'étape E15, l'entité 24 C-SON2 met à jour, dans un message M8, les profils des terminaux pouvant s'attacher au réseau 1 dans l'entité 28 UDM (« Unified Data Management ») pour ajouter la nouvelle possibilité d'attachement des terminaux au réseau 1 et les conditions, notamment d'autorisation de connectivité, d'authentification et de qualité de service, associées ainsi que le technologies pour lesquelles la transaction est valide. L'entité 28 UDM, à la réception du message M8 lors de l'étape E16, met à jour les profils des terminaux. Selon une alternative, les profils d'un nombre limité de terminaux peuvent être mis à jour, en fonction de leur position géographique ou de leur contrat, par exemple s'ils bénéficient d'une offre de connectivité enrichie ou s'ils disposent de crédits dans le portefeuille associé au compte de l'utilisateur

Lors de l'étape E17, l'entité 24 C-SON2 met également à jour l'entité 25 de contrôle PCF (« Policy and control Function ») par l'envoi d'un message M9. Ce message M9 comprend une information pour indiquer au PCF de mettre à jour, à la réception du message M9 lors de l'étape E18, les politiques d'attachement associées aux terminaux concernés par le procédé et notamment la facturation associée pour la zone géographique concernée et l'identifiant de transaction unique. Selon une alternative, l'entité 24 peut également envoyer un message M9 aux dispositifs de type PCF ou PCRF du réseau 1 notamment dans le cas où la transaction est valide pour des services dits « Local Breakout » ou le réseau 1 achemine directement les données des terminaux du réseau 2 vers leur destination sans recourir aux dispositifs du réseau 1.

Lors de l'étape E19, l'entité 25 PCF transmet à une entité 18 de contrôle AMF («Access and Mobility Function ») du réseau 1 en transmettant dans un message M10 comprenant une instruction de gestion pour l'attachement des terminaux de clients de l'opérateur au réseau 2 pour une zone géographique donnée. Cette instruction indique à l'entité de contrôle 18 que les terminaux ayant un identifiant correspondant à l'opérateur du réseau 1 doivent pouvoir s'attacher au réseau 2 dans la zone géographique indiquée. Selon une alternative, cette instruction comprend une durée de validité pendant laquelle les terminaux peuvent s'attacher. Selon une autre alternative, dans le cas où l'instruction n'est valide que pour un ensemble de terminaux, les identifiants de ces terminaux sont également transmis dans l'instruction du message M10. Selon une autre alternative, le message M10 comprend une application pour laquelle la transaction est valide. Selon encore une autre alternative le message M10 comprend un identifiant de transaction. Selon encore une autre alternative, le message M10 comprend une durée de validité pendant laquelle les terminaux du réseau 2 peuvent s'attacher au réseau 1. Selon encore une autre alternative, le message M10 comprend un nombre de crédits qui peuvent être consommés par les terminaux du réseau 2 pour leur attachement au réseau 1.

A la réception du message M10 lors de l'étape E20, l'entité 18 AMF du réseau 1 met à jour sa configuration en autorisant un attachement des terminaux identifiés dans le message M10 ainsi que la durée de validité et les autres paramètres présents dans le message M10. Cette modification, selon une alternative, consiste à ajouter des règles de filtrage que l'entité 18 peut ensuite communiquer aux autres entités du réseau 1 pour autoriser ou non l'attachement des terminaux de l'opérateur du réseau 2. Selon un exemple, la mise à jour de la configuration comprend un seuil correspondant au nombre de terminaux du réseau 2 pouvant être attachés au réseau 1. Ce seuil a pour objet de limiter l'utilisation des ressources du réseau 1 par les terminaux du réseau 2. Selon un autre exemple, la mise à jour de la configuration comprend une valeur maximale de données acheminées par des terminaux du réseau 2 ou bien encore un nombre de crédits associés à la transaction. Ainsi, les terminaux de clients du réseau 1 ne risquent pas de manquer de ressources à un moment donné dès lors que des crédits ou que les terminaux n'ont pas atteint un seuil relatif à la transaction.

Lors d'une étape E22, l'entité 18 de contrôle AMF émet à destination du terminal 31, abonné à l'opérateur du réseau 2, un message M11 comprenant un paramètre de configuration pour que le terminal 31 puisse s'attacher au réseau 1. Le message M11 peut aussi comprendre des informations relatives à une modification des paramètres d'attachement. Le message M11 peut également comprendre une information informant le terminal 31 qu'il ne doit plus s'attacher au réseau 1. L'entité de contrôle peut transmettre cette information à tous les terminaux de l'opérateur 2 avec une indication de la zone géographique au sein de laquelle ils peuvent s'attacher au réseau 1 ou bien seulement aux terminaux dont les identifiants ont été reçus dans le message M10. L'entité 18 AMF peut transmettre le message M10 uniquement aux terminaux déjà attachés, ou bien transmettre le message aux terminaux y compris s'ils ne sont pas attachés c'est-à-dire en veille, ou bien uniquement lorsque le terminal arrive dans la zone géographique. Ce message M11 est uniquement reproduit pour le terminal 31 sur la figure 3 mais il est aussi transmis aux autres terminaux de l'opérateur du réseau 1 ou une partie de ces terminaux. L'AMF du réseau 2 peut recevoir de la même façon du PCF du réseau 2 le message M10.

Lors de l'étape E23, le terminal 31 reçoit le message M11 et met à jour sa configuration pour pouvoir effectivement demander à s'attacher ou modifier son attachement au réseau 1. Cette configuration consiste par exemple à ajouter le réseau 1, et notamment l'identifiant PLMN transmis par l'entité 18 AMF, dans sa liste de réseaux, possiblement la date et la durée pendant laquelle il peut s'y attacher et la zone géographique au sein de laquelle il peut demander à s'y attacher.

Lors de l'étape E24, l'entité 41 MP émet un message M12 d'acquittement de l'offre de ressources à l'entité 14 C-SON1 via l'entité 19 NEF1. Ce message M12 peut être transmis indifféremment avant la transmission du message M11 par l'entité 18. Ce message peut être transmis simultanément lors de la transmission du message M7. L'entité 14 C-SON1 reçoit cet acquittement, via l'entité 19 NEF1, lors de l'étape E25, ce qui lui permet de prendre en compte les nouveaux attachements au réseau 1 et de les intégrer aux futurs messages M2 comprenant les terminaux attachés. Ce message M2 comprend notamment l'identifiant unique de transaction validé, permettant de mettre à jour les portefeuilles des comptes des clients et/ou des opérateurs.

Lors de l'étape E26, l'entité 14 C-SON1 transmet un message M13 de configuration des équipements d'accès pour autoriser l'attachement ou non des terminaux au réseau 1. Le message M13 permet aussi de modifier les conditions d'attachement si nécessaire, par exemple pour interdire la mobilité sur une technologie radio dans une zone géographique. Le message M13 est transmis à l'entité 16 C-SON qui gère les réseaux d'accès. Cette entité 16 est en charge ensuite de mettre à jour la configuration des réseaux d'accès conformément au message M13 reçu lors de l'étape E27.

Lors de l'étape E28, l'entité 14 C-SON1 transmet un message M14 de commande d'attachement au terminal 31. Ce message a pour objet de compléter les informations de configuration du terminal 1 reçues notamment dans le message M11 et lui indiquer par exemple les conditions d'attachement au réseau 1. Par exemple, si le réseau 1 propose différents types de technologies d'accès (UMTS (Universal Mobile Telecommunications System), WLAN (Wireless Local Area Network), LTE (Long Term Evolution)), il pourra lui indiquer quels types d'accès sont autorisés ou non de façon à ce que le terminal 31 ne soit pas rejeté en cas de tentative d'attachement à un réseau utilisant une technologie non comprise dans l'accord. Le terminal 31 met à jour sa configuration à la réception du message M14 lors de l'étape E29 et peut à partir de ce moment, s'attacher au réseau 1 dans les conditions qui lui sont communiquées dans les messages M11 et M13. Le message M14 peut aussi contenir les informations sur les transactions passées par son opérateur avec les crédits utilisés lors des transactions et le nombre restant de crédits dans le compte utilisateur.

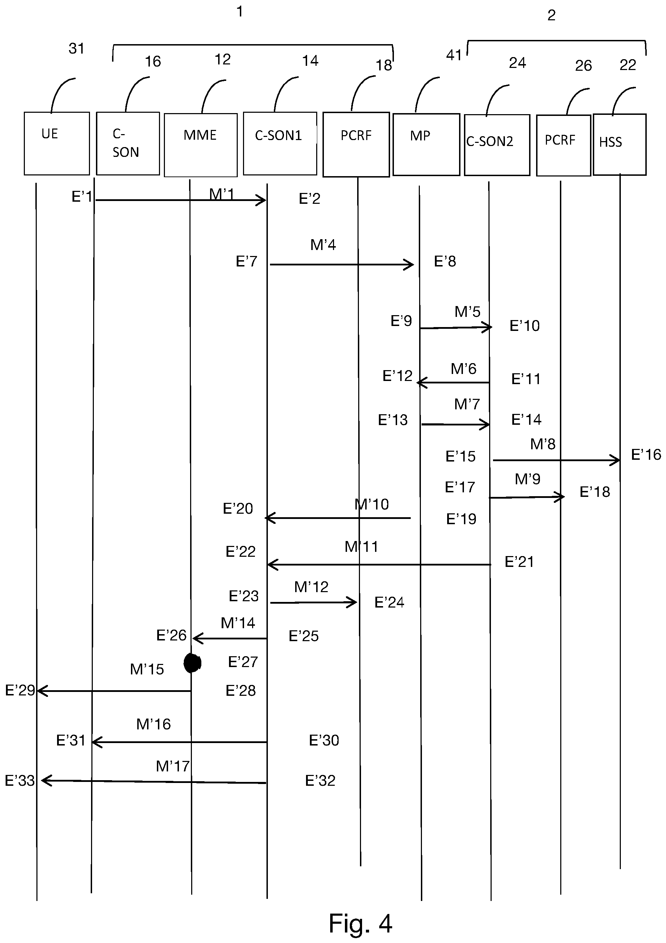

La **figure 4** présente un aperçu du procédé de configuration d'un terminal, selon un troisième mode de réalisation de l'invention. Les entités de la figure correspondant aux entités décrites dans les figures 1 et 2 sont identifiées par les mêmes numéros dans la figure 4. Dans cette figure 4, par rapport à la figure 3, le réseau 1 ne dispose pas d'entité 17 NA.

Les étapes E'1 à E'14 sont identiques aux étapes E1 à E14 de la figure 3 à la différence qu'il n'y a pas d'étape E'3 à E'6 dans la figure 4 par l'absence d'entité NA. Ainsi l'entité 16 transmet des statistiques sur l'utilisation des réseaux d'accès à l'entité 14 C-SON1 dans un message M'1 et l'entité 14 transmet les informations sur les terminaux connectés et la disponibilité ou le manque de ressources dans un message M'4 transmis à l'entité 41.

Les étapes E'15 à E'18 sont identiques aux étapes E15 à E18 à la différence que l'entité 26 de contrôle PCRF remplace l'entité PCF et l'entité 22 HSS remplace l'entité UDM de la figure 3 mais en prenant leurs rôles respectifs et en proposant également les alternatives indiquées dans la figure 3.

Lors de l'étape E'19, l'entité 41 MP émet un message M'10 d'acquittement de l'offre de ressources à l'entité 14 C-SON1 de gestion. Ce message contient des informations sur l'accord d'itinérance dynamique contractualisé avec l'opérateur du réseau 1 et notamment un identifiant de transaction unique permettant de retrouver dans une base de registre de transactions les informations sur les identifiants des comptes des acteurs du contrat, et le prix de la transaction en crédits. Le message M'10 comprend en outre la caractéristique relative à la zone géographique valide dans l'accord. L'entité 14 reçoit ce message M'10 lors de l'étape E'20 et se met en position de devoir configurer les entités du réseau 1 pour permettre la mise en oeuvre de l'accord.

Lors de l'étape E'21 l'entité 24 C-SON2 de gestion du réseau 2 transmet un message M'11 à l'entité 14 C-SON 1 de gestion du réseau 1 pour lui indiquer les critères relatifs à l'accord. Il peut s'agir d'une simple notification de l'accord pour les terminaux des clients de l'opérateur 2 possiblement complété d'une date et une durée de validité de l'accord, d'un nombre de crédits, d'une liste de terminaux et de leurs identifiants pour lesquels l'accord est valide et possiblement aussi une liste de technologies du réseau 1 pour lesquelles l'itinérance est valide voire aussi des informations sur le type de facturation associé. L'identifiant de transaction unique permet de récupérer dans la base de registres les identifiants des comptes qui seront débités pour l'utilisation de ressources du réseau visité.

A la réception du message M'11 lors de l'étape E'22, l'entité 14 C-SON1 émet un message M'12 de configuration à destination de l'entité 18 PCRF de contrôle du réseau 1 lors de l'étape E'23. Ce message comprend notamment des politiques de filtrage, de comptage et l'identifiant de transaction unique permettant de récupérer les informations nécessaires à la facturation pour les terminaux du réseau 2 qui s'attacheront au réseau 1. L'entité 18 met à jour sa configuration avec les informations reçues lors de l'étape E'24.

A l'étape E'25, l'entité 14 C-SON1 émet un message M'13 à destination de l'entité 12 MME (Mobility Management Entity) comprenant une instruction de gestion de l'attachement des terminaux qui s'attacheront au réseau 1 conformément au contrat. L'instruction de gestion consiste à déterminer la politique associée à un terminal du réseau 2 dans l'entité 12 MME. L'entité 12 ayant notamment pour rôle de gérer le contrôle d'accès et les droits d'accès, il configure lors de l'étape E'27 les droits liés aux terminaux pouvant s'attacher au réseau 2 lors de la réception du message M'13 à l'étape E'26. Ainsi, l'entité 14 peut contrôler l'attachement des terminaux conformément à l'instruction reçue indirectement de l'entité de contrôle 24 du réseau 2.

Lors de l'étape E'28, l'entité 14 MME émet un message M'15 comprenant un paramètre de configuration au terminal 31. Ce message correspond au message M11 de la figure 3 et est reçu par le terminal 31 lors de l'étape E'29.

Les étapes E'30, E'31 et le message M'16 correspondent respectivement aux étapes E26 et E27 et au message M13 de la figure 3. Le message M'16 permet à l'entité 16 C-SON1 de déterminer ensuite les informations de surveillance des réseaux et notamment le nombre de terminaux attachés dans la zone géographique, le volume de données transmis, les technologies et les services (voix, données, ...), les crédits disponibles des comptes identifiés dans les transactions validées (les crédits restants) utilisés par les terminaux.

Les étapes E'32, E'33 et le message M'17 correspondent respectivement aux étapes E28, E29 et le message M14 de la figure 3. Selon une variante, le message M'17 peut être émis par l'entité 24 de gestion C-SON2 dans le cas notamment où l'opérateur 2 veut conserver la maîtrise de la politique d'attachement (priorité des réseaux, priorité des technologies...) en lien par exemple avec une politique définie dans une architecture basée sur une technologie ANDSF (« Access Network Discovery and Sélection Function ») mise en oeuvre par l'opérateur 2.

Selon une alternative, les étapes relatives à la contractualisation et notamment les étapes E'7 à E'14 peuvent être remplacées par une négociation directe des opérateurs des réseaux 1 et 2 sans faire intervenir d'entité 41. Les opérateurs 1 et 2 se mettent d'accord pour se louer des ressources de transmission, par exemple sur la base d'un nombre de crédits, lorsque l'un des deux en a besoin, ce qui nécessite de configurer dynamiquement les entités de contrôle et les terminaux en fonction des ressources louées et de la zone géographique concernée.

Le terminal 31 peut ensuite s'attacher au réseau 2 conformément aux informations présentes dans les messages M'15 et M'17. L'attachement du terminal au réseau 2 n'est pas représenté sur la figure 4.

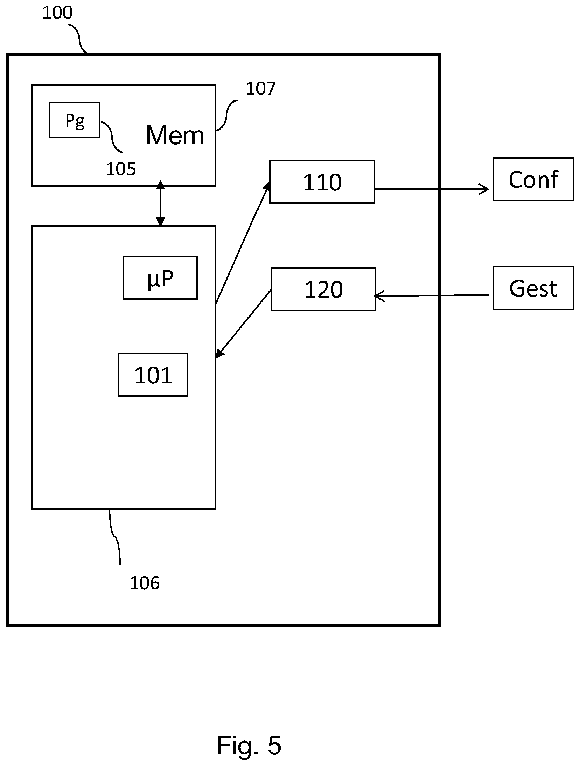

En relation avec la **figure 5****,** on présente un exemple de structure d'un dispositif 100 de configuration, selon un aspect de l'invention.

Le dispositif 100 de configuration met en oeuvre le procédé de configuration, dont différents modes de réalisation viennent d'être décrits.

Un tel dispositif 100 peut être mis en oeuvre dans un dispositif de contrôle d'un réseau de communication, tel qu'une entité de type MME, AMF.

Par exemple, le dispositif 100 comprend une unité de traitement 106, équipée par exemple d'un microprocesseur pP, et pilotée par un programme d'ordinateur 105, stocké dans une mémoire 107 et mettant en oeuvre le procédé d'acheminement selon l'invention. A l'initialisation, les instructions de code du programme d'ordinateur 105 sont par exemple chargées dans une mémoire RAM, avant d'être exécutées par le processeur de l'unité de traitement 106.

Un tel dispositif 100 comprend :
- un récepteur (120), apte à recevoir en provenance d'une entité de contrôle du premier réseau, une instruction de gestion (gest) relative à l'attachement de l'au moins un terminal au deuxième réseau pour une zone géographique,
- un module (101) de configuration, apte à configurer une donnée relative au contrôle de l'attachement de l'au moins un terminal en fonction de l'instruction de gestion reçue,
- un émetteur, apte à émettre à destination de l'au moins un terminal, au moins un paramètre de configuration (conf) pour l'attachement de l'au moins un terminal au deuxième réseau.

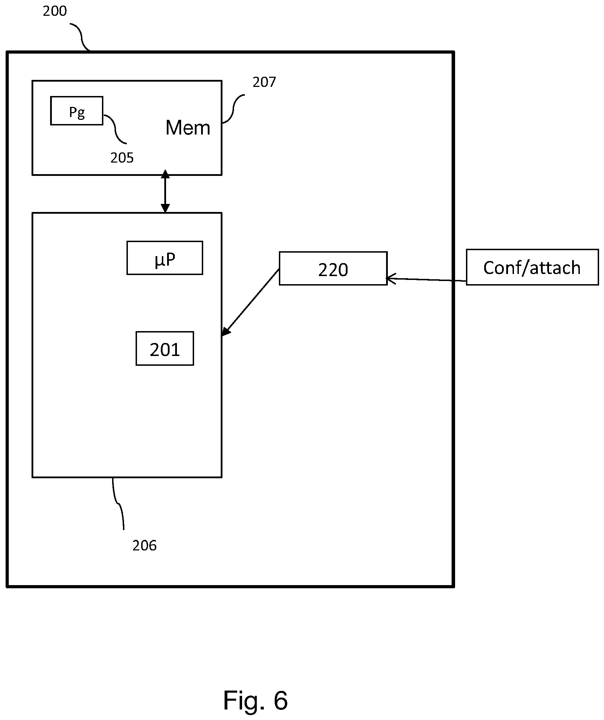

En relation avec la **figure 6****,** on présente un exemple de structure d'un terminal, selon un aspect de l'invention.

Un tel terminal 200 peut être mis en oeuvre dans un terminal mobile, un terminal fixe ou tout type d'équipement d'extrémité s'attachant à un réseau de communication, fixe ou mobile.

Par exemple, le dispositif 200 comprend une unité de traitement 206, équipée par exemple d'un microprocesseur pP, et pilotée par un programme d'ordinateur 205, stocké dans une mémoire 207 et mettant en oeuvre le procédé d'acheminement selon l'invention. A l'initialisation, les instructions de code du programme d'ordinateur 205 sont par exemple chargées dans une mémoire RAM, avant d'être exécutées par le processeur de l'unité de traitement 206.

Le terminal 200 comprend :
- un récepteur (220) apte à recevoir,
   - en provenance d'une entité de contrôle du deuxième réseau, au moins un paramètre (conf) de configuration pour l'attachement de l'au moins un terminal au deuxième réseau,
   - un message de commande d'attachement (attach) comprenant des conditions d'attachement au deuxième réseau,
- un module (201) de configuration pour mettre à jour la liste des réseaux auxquels il peut accéder et la zone géographique associée aux réseaux.

## Revendications

1. Procédé de configuration d'au moins un terminal (31) d'un utilisateur client d'un opérateur gérant un premier réseau (2) de communications, préalablement à une demande d'attachement de l'au moins un terminal (31) à un deuxième réseau (1) de communications dont des ressources de transmission sont temporairement utilisées pour l'acheminement de données de l'au moins un terminal (31) à destination d'un serveur distant, le procédé comprenant les étapes suivantes mises en oeuvre par une entité (18, 12) de contrôle du deuxième réseau (1):
- Réception en provenance d'une entité (18, 12) de contrôle du premier réseau (2) d'une instruction de gestion relative à l'attachement de l'au moins un terminal (31) au deuxième réseau (1) pour une zone géographique,
- Configuration d'une donnée relative au contrôle de l'attachement de l'au moins un terminal (31) en fonction de l'instruction de gestion reçue,
- Emission à destination de l'au moins un terminal (31) d'au moins un paramètre de configuration pour l'attachement de l'au moins un terminal (31) au deuxième réseau (1).

2. Procédé de configuration selon la revendication 1, où l'instruction de gestion comprend en outre une date ou une durée.

3. Procédé de configuration selon la revendication 1 ou la revendication 2, où l'instruction de gestion comprend au moins un identifiant de l'au moins un terminal.

4. Procédé de configuration selon l'une quelconque des revendications 1 à 3, où l'instruction de gestion comprend un identifiant de transaction.

5. Procédé de configuration selon l'une quelconque des revendications 1 à 4, où l'instruction de gestion comprend une quantité de crédits.

6. Procédé de configuration selon l'une quelconque des revendications 1 à 5, où la donnée relative au contrôle de l'attachement comprend des règles de filtrage.

7. Procédé de configuration, selon l'une quelconque des revendications 1 à 6, où la donnée relative au contrôle de l'attachement comprend au moins un critère utilisé pour autoriser ou non l'attachement du terminal.

8. Procédé de configuration selon l'une quelconque des revendications 1 à 7, où l'au moins un paramètre de configuration comprend un identifiant de transaction.

9. Procédé de configuration selon l'une quelconque des revendications 1 à 8 où l'au moins un paramètre de configuration comprend une clé de sécurité de l'opérateur gérant le premier réseau.

10. Procédé de configuration, selon l'une quelconque des revendications 1 à 9, où l'au moins un paramètre de configuration comprend une durée de validité pour s'attacher au deuxième réseau.

11. Dispositif (100) de configuration, comportant des moyens pour configurer au moins un terminal (31) d'un utilisateur client d'un opérateur gérant un premier réseau (2) de communications, préalablement à une demande d'attachement de l'au moins un terminal (31) à un deuxième réseau (1) de communications dont des ressources de transmission sont temporairement utilisées pour l'acheminement de données de l'au moins un terminal (31) à destination d'un serveur distant, mis en oeuvre dans une entité de contrôle du deuxième réseau et comprenant :
- un récepteur, apte à recevoir en provenance d'une entité de contrôle du premier réseau, une instruction de gestion relative à l'attachement de l'au moins un terminal au deuxième réseau pour une zone géographique,
- un module de configuration, apte à configurer une donnée relative au contrôle de l'attachement de l'au moins un terminal en fonction de l'instruction de gestion reçue,
- un émetteur, apte à émettre à destination de l'au moins un terminal, au moins un paramètre de configuration pour l'attachement de l'au moins un terminal au deuxième réseau.

12. Terminal d'un utilisateur client d'un opérateur gérant un premier réseau de communications, apte à s'attacher à un deuxième réseau de communications dont des ressources de transmission sont temporairement utilisées pour l'acheminement de données du terminal à destination d'un serveur distant, comprenant :
- un récepteur apte à recevoir,
- en provenance d'une entité de contrôle du deuxième réseau, au moins un paramètre de configuration pour l'attachement de l'au moins un terminal au deuxième réseau,
- un message de commande d'attachement comprenant des conditions d'attachement au deuxième réseau,
- un module de configuration pour mettre à jour la liste des réseaux auxquels il peut accéder en ajoutant le deuxième réseau et la zone géographique associée au deuxième réseau ajouté,
- un émetteur, apte à émettre une demande d'attachement au deuxième réseau ajouté.

13. Terminal, selon la revendication 12, où l'attachement au deuxième réseau est réalisé en utilisant un nombre de crédits de l'utilisateur.

14. Programme d'ordinateur, **caractérisé en ce qu'**il comprend des instructions pour la mise en oeuvre des étapes du procédé de configuration selon la revendication 1, lorsque ce procédé est exécuté par un processeur.

15. Support d'enregistrement lisible par un dispositif de configuration conforme à la revendication 11, sur lequel est enregistré le programme selon la revendication 14.

## Patentansprüche

1. Verfahren zur Konfiguration mindestens eines Endgeräts (31) eines Client-Benutzers eines ein erstes Kommunikationsnetzwerk (2) verwaltenden Betreibers vor einem Antrag zur Verbindung des mindestens einen Endgeräts (31) mit einem zweiten Kommunikationsnetzwerk (1), von dem Übertragungsressourcen vorübergehend für die Weiterleitung von Daten von dem mindestens einen Endgerät (31) zu einem fernen Server verwendet werden, wobei das Verfahren die folgenden Schritte enthält, die von einer Kontrolleinheit (18, 12) des zweiten Netzwerks (1) durchgeführt werden:
- Empfang aus einer Kontrolleinheit (18, 12) des ersten Netzwerks (2) einer Verwaltungsanweisung bezüglich der Verbindung des mindestens einen Endgeräts (31) mit dem zweiten Netzwerk (1) für eine geographische Zone,
- Konfiguration eines Datenwerts bezüglich der Kontrolle der Verbindung des mindestens einen Endgeräts (31) abhängig von der empfangenen Verwaltungsanweisung,
- Senden an das mindestens eine Endgerät (31) mindestens eines Konfigurationsparameters zur Verbindung des mindestens einen Endgeräts (31) mit dem zweiten Netzwerk (1).

2. Konfigurationsverfahren nach Anspruch 1, wobei die Verwaltungsanweisung außerdem ein Datum oder einen Zeitraum enthält.

3. Konfigurationsverfahren nach Anspruch 1 oder Anspruch 2, wobei die Verwaltungsanweisung mindestens eine Kennung des mindestens einen Endgeräts enthält.

4. Konfigurationsverfahren nach einem der Ansprüche 1 bis 3, wobei die Verwaltungsanweisung eine Transaktionskennung enthält.

5. Konfigurationsverfahren nach einem der Ansprüche 1 bis 4, wobei die Verwaltungsanweisung eine Menge von Guthaben enthält.

6. Konfigurationsverfahren nach einem der Ansprüche 1 bis 5, wobei der Datenwert bezüglich der Kontrolle der Verbindung Filterregeln enthält.

7. Konfigurationsverfahren, nach einem der Ansprüche 1 bis 6, wobei der Datenwert bezüglich der Kontrolle der Verbindung mindestens ein Kriterium enthält, das verwendet wird, um die Verbindung des Endgeräts zu genehmigen oder nicht.

8. Konfigurationsverfahren nach einem der Ansprüche 1 bis 7, wobei der mindestens eine Konfigurationsparameter eine Transaktionskennung enthält.

9. Konfigurationsverfahren nach einem der Ansprüche 1 bis 8, wobei der mindestens eine Konfigurationsparameter einen Sicherheitsschlüssel des das erste Netzwerk verwaltenden Betreibers enthält.

10. Konfigurationsverfahren, nach einem der Ansprüche 1 bis 9, wobei der mindestens eine Konfigurationsparameter einen Gültigkeitszeitraum enthält, um sich mit dem zweiten Netzwerk zu verbinden.

11. Konfigurationsvorrichtung (100), die Einrichtungen aufweist, um mindestens ein Endgerät (31) eines Client-Benutzers eines ein erstes Kommunikationsnetzwerk (2) verwaltenden Betreibers vor einem Antrag zur Verbindung des mindestens einen Endgeräts (31) mit einem zweiten Kommunikationsnetzwerk (1) zu konfigurieren, von dem Übertragungsressourcen vorübergehend für die Weiterleitung von Daten von dem mindestens einen Endgerät (31) zu einem fernen Server verwendet werden, die in einer Kontrolleinheit des zweiten Netzwerks verwendet wird und enthält:
- einen Empfänger, der geeignet ist, von einer Kontrolleinheit des ersten Netzwerks eine Verwaltungsanweisung bezüglich der Verbindung des mindestens einen Endgeräts mit dem zweiten Netzwerk für eine geographische Zone zu empfangen,
- ein Konfigurationsmodul, das geeignet ist, einen Datenwert bezüglich der Kontrolle der Verbindung des mindestens einen Endgeräts abhängig von der empfangenen Verwaltungsanweisung zu konfigurieren,
- einen Sender, der geeignet ist, an das mindestens eine Endgerät mindestens einen Konfigurationsparameter für die Verbindung des mindestens einen Endgeräts mit dem zweiten Netzwerk zu senden.

12. Endgerät eines Client-Benutzers eines ein erstes Kommunikationsnetzwerk verwaltenden Betreibers, das geeignet ist, sich mit einem zweiten Kommunikationsnetzwerk zu verbinden, von dem Übertragungsressourcen vorübergehend für die Weiterleitung von Daten von dem Endgerät zu einem fernen Server verwendet werden, das enthält:
- einen Empfänger, der geeignet ist zu empfangen
- von einer Kontrolleinheit des zweiten Netzwerks mindestens einen Konfigurationsparameter für die Verbindung des mindestens einen Endgeräts mit dem zweiten Netzwerk,
- eine Verbindungssteuerungsnachricht, die Verbindungsbedingungen mit dem zweiten Netzwerk enthält,
- ein Konfigurationsmodul, um die Liste der Netzwerke zu aktualisieren, auf die es zugreifen kann, indem das zweite Netzwerk und die dem hinzugefügten zweiten Netzwerk zugeordnete geographische Zone hinzugefügt werden,
- einen Sender, der geeignet ist, einen Verbindungsantrag mit dem hinzugefügten zweiten Netzwerk zu senden.

13. Endgerät nach Anspruch 12, wobei die Verbindung mit dem zweiten Netzwerk durch Verwendung einer Anzahl von Guthaben des Benutzers durchgeführt wird.

14. Computerprogramm, **dadurch gekennzeichnet, dass** es Anweisungen zur Durchführung der Schritte des Konfigurationsverfahrens nach Anspruch 1 enthält, wenn dieses Verfahren von einem Prozessor ausgeführt wird.

15. Speicherträger, der von einer Konfigurationsvorrichtung gemäß Anspruch 11 lesbar ist, auf dem das Programm nach Anspruch 14 gespeichert ist.

## Claims

1. Method for configuring at least one terminal (31) of a client user of an operator managing a first communications network (2), prior to a request to attach the at least one terminal (31) to a second communications network (1) whose transmission resources are temporarily used to route data from the at least one terminal (31) to a remote server, the method comprising the following steps implemented by a control entity (18, 12) of the second network (1):
- Receiving, from a control entity (18, 12) of the first network (2), a management instruction relating to the attachment of the at least one terminal (31) to the second network (1) for a geographical area,
- Configuring an item of data relating to controlling the attachment of the at least one terminal (31) on the basis of the received management instruction,
- Sending, to the at least one terminal (31), at least one configuration parameter for the attachment of the at least one terminal (31) to the second network (1).

2. Configuration method according to Claim 1, wherein the management instruction furthermore comprises a date or a duration.

3. Configuration method according to Claim 1 or Claim 2, wherein the management instruction comprises at least one identifier of the at least one terminal.

4. Configuration method according to any one of Claims 1 to 3, wherein the management instruction comprises a transaction identifier.

5. Configuration method according to any one of Claims 1 to 4, wherein the management instruction comprises a quantity of credits.

6. Configuration method according to any one of Claims 1 to 5, wherein the item of data relating to controlling the attachment comprises filtering rules.

7. Configuration method according to any one of Claims 1 to 6, wherein the item of data relating to controlling the attachment comprises at least one criterion used to authorize or not authorize the attachment of the terminal.

8. Configuration method according to any one of Claims 1 to 7, wherein the at least one configuration parameter comprises a transaction identifier.

9. Configuration method according to any one of Claims 1 to 8, wherein the at least one configuration parameter comprises a security key of the operator managing the first network.

10. Configuration method according to any one of Claims 1 to 9, wherein the at least one configuration parameter comprises a validity duration for attaching to the second network.

11. Configuration device (100) comprising means for configuring at least one terminal (31) of a client user of an operator managing a first communications network (2), prior to a request to attach the at least one terminal (31) to a second communications network (1) whose transmission resources are temporarily used to route data from the at least one terminal (31) to a remote server, implemented in a control entity of the second network and comprising:
- a receiver, able to receive, from a control entity of the first network, a management instruction relating to the attachment of the at least one terminal to the second network for a geographical area,
- a configuration module, able to configure an item of data relating to controlling the attachment of the at least one terminal on the basis of the received management instruction,
- a transmitter, able to send, to the at least one terminal, at least one configuration parameter for the attachment of the at least one terminal to the second network.

12. Terminal of a client user of an operator managing a first communications network, able to attach to a second communications network whose transmission resources are temporarily used to route data from the terminal to a remote server, comprising:
- a receiver able to receive,
- from a control entity of the second network, at least one configuration parameter for attaching the at least one terminal to the second network,
- an attachment control message comprising conditions of attachment to the second network,
- a configuration module for updating the list of networks that it is able to access by adding the second network and the geographical area associated with the second network added,
- a transmitter, able to send an attachment request to the second network added.

13. Terminal according to Claim 12, wherein the attachment to the second network is carried out using a number of user credits.

14. Computer program, **characterized in that** it comprises instructions for implementing the steps of the configuration method according to Claim 1 when this method is executed by a processor.

15. Recording medium able to be read by a configuration device according to Claim 11 and on which the program according to Claim 14 is recorded.
